# EUROPEAN PATENT SPECIFICATION

(11) **EP 1 627 760 B1**
(45) Date of publication and mention of the grant of the patent: **08.10.2008**
(21) Application number: 05017112.3
(22) Date of filing: 05.08.2005
(51) Int. Cl.: B60K 1/04

(54) **Fuel cell electric vehicle**
Elektrofahrzeug mit einer Brennstoffzelle
Véhicule électrique équipé d'une pile à combustible

(30) Priority: 20.08.2004 JP 2004240700; 19.08.2004 JP 2004239695
(43) Date of publication of application: 22.02.2006
(73) Proprietor: Honda Motor Co., Ltd., Tokyo (JP)
(72) Inventor: Tokumura, Daisuke c/o K.K. Honda Gijutsu Kenkyusho, Wako-shi Saitama (JP); Horii, Yoshiyuki c/o K.K. Honda Gijutsu Kenkyusho, Wako-shi Saitama (JP); Watanabe, Junya K.K. Honda Gijutsu Kenkyusho, Wako-shi Saitama (JP)
(74) Representative: Trossin, Hans-Jürgen

(56) References cited:
- EP-A- 1 398 263
- US-A- 5 193 635
- US-A1- 2002 066 606
- US-A1- 2004 050 606
- US-A1- 2004 060 750
- US-B1- 6 378 637

## Description

The present invention relates to the arrangement of a hydrogen cylinder in a fuel cell electric vehicle.

Heretofore, there is a fuel cell electric vehicle for driving a motor for driving the vehicle based upon electric power supplied from a fuel cell in which a hydrogen cylinder is arranged above a driving wheel so that the longitudinal direction is along a longitudinal direction of the vehicle (for example, refer to
JP-A No. 130468/2001.

In the above-mentioned conventional type constitution, clearance between a driving wheel and a hydrogen cylinder is required to be considered to secure a sufficient stroke when the driving wheel is vertically rocked, however, when the hydrogen cylinder is merely shifted higher than the driving wheel, the relatively heavy hydrogen cylinder is arranged higher and it is difficult to lower the center of the gravity of the vehicle.

A fuel cell electric vehicle of this type is also known from the documents US 2004 0050606 and EP 1398263.

Then, the invention provides a fuel cell electric vehicle where a sufficient stroke of a rocked driving wheel can be secured, lowering the center of the gravity of the vehicle.

This is achieved by a two-wheel fuel cell electric vehicle with the features of claim 1.

According to the configuration, clearance between the hydrogen cylinder and the driving wheel can be secured without merely vertically shifting the hydrogen cylinder.

That is, as in the invention according to Claim 2, in a fuel cell electric vehicle configured as a motorcycle for example in which the driving wheel is attached to a rear frame (for example, a motor unit 20 in the embodiment) supported so that the rear frame can be rocked by a body frame (for example, a body frame 4 in the embodiment), a sufficient stroke of the rocked driving wheel can be secured, lowering the center of the gravity of the vehicle.

In case the fuel cell electric vehicle is configured as a saddle-ride type vehicle such as a motorcycle, the width of the body in the following part along the following foot can be prevented from being made wide because of the hydrogen cylinder even if a seated rider's foot is put on a foot put position normally in front of a position of a seat if the end of the hydrogen cylinder is located substantially just beside the position of the seat of the vehicle as in the invention according to Claim 3.

At this time, as in the invention according to Claim 4, in case the hydrogen cylinder is substantially cylindrical and the end is tapered, effect that comfort when the rider puts his/her feet is more enhanced is produced by forming the end of the hydrogen cylinder so that it is spherical.

The invention according to Claim 5 is characterized in that a body cover (for example, a body cover 42 in the embodiment) covering the surface of the hydrogen cylinder is provided.

According to the configuration, the hydrogen cylinder is protected from water and flying gravel and the appearance of the vehicle is kept satisfactory.

According to the invention disclosed in Claims 1 and 2, a sufficient stroke of the rocked driving wheel can be secured, lowering the center of the gravity of the vehicle.

According to the invention disclosed in Claim 3, the comfort when the rider puts his/her feet of the vehicle can be enhanced, inhibiting the width of the body in the part along the rider's foot.

According to the invention disclosed in Claim 4, the comfort when the rider puts his/her feet of the vehicle can be more enhanced.

According to the invention disclosed in Claim 5, a performance in protecting the hydrogen cylinder can be enhanced and the appearance quality of the vehicle can be enhanced.

Referring to the drawings, preferred embodiments of the invention will be described below.
Fig. 1 is a left side view showing a fuel cell electric vehicle (a motorcycle) equivalent to an embodiment of the invention;
Fig. 2 is a right side view showing the fuel cell electric vehicle;
Fig. 3 is a bottom view showing the fuel cell electric vehicle;
Fig. 4 is a block diagram showing a main part of a fuel cell system in the fuel cell electric vehicle;
Fig. 5 is an enlarged view showing a main part in Fig. 1;
Fig. 6 is a right side view showing intake/exhaust members in the fuel cell electric vehicle;
Fig. 7 is a top view showing the intake/exhaust members;
Fig. 8 is a left side view showing a state in which a rider rides on the fuel cell electric vehicle;
Fig. 9 is a top view showing the rear of the fuel cell electric vehicle;
Fig. 10 shows a part viewed along a line A in Fig. 1; and
Fig. 11 is a perspective view showing the fuel cell electric vehicle viewed from the left diagonally front.

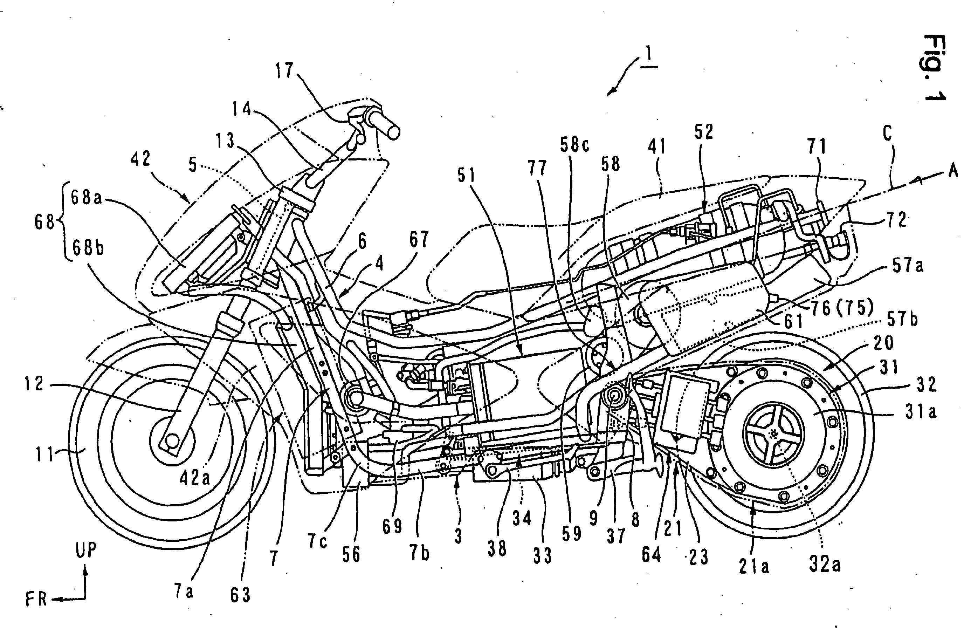

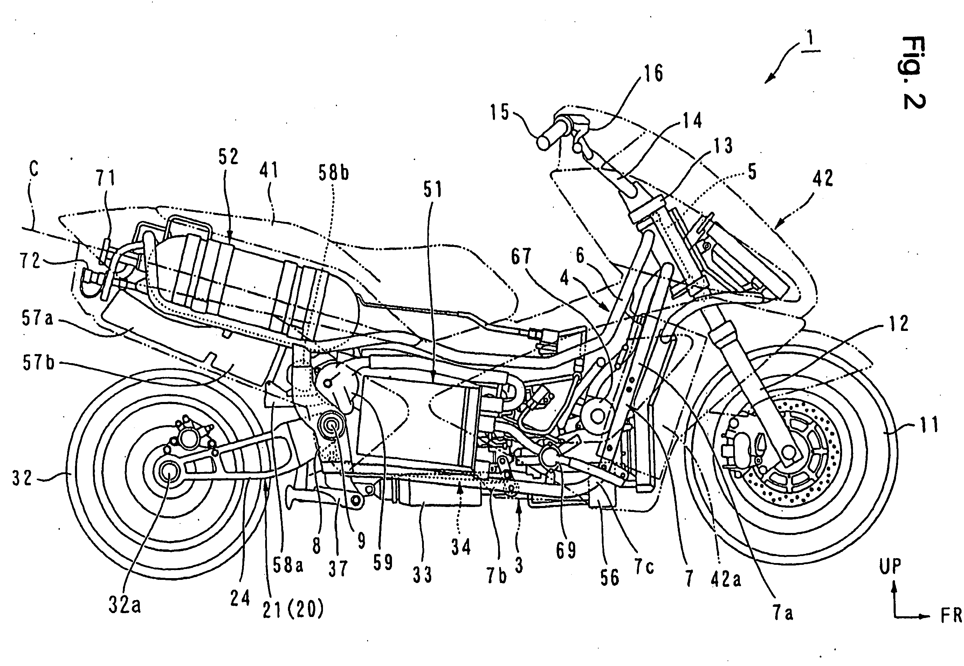

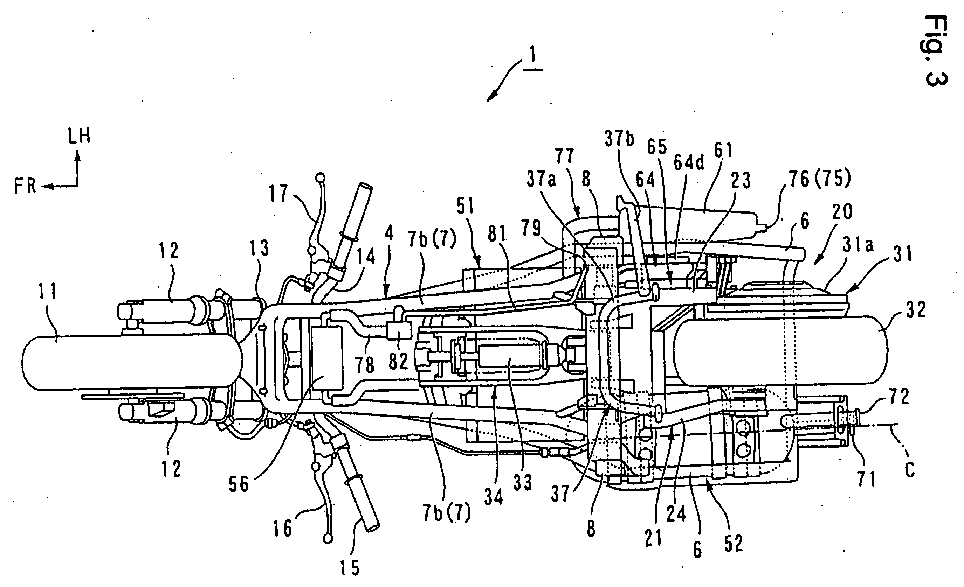

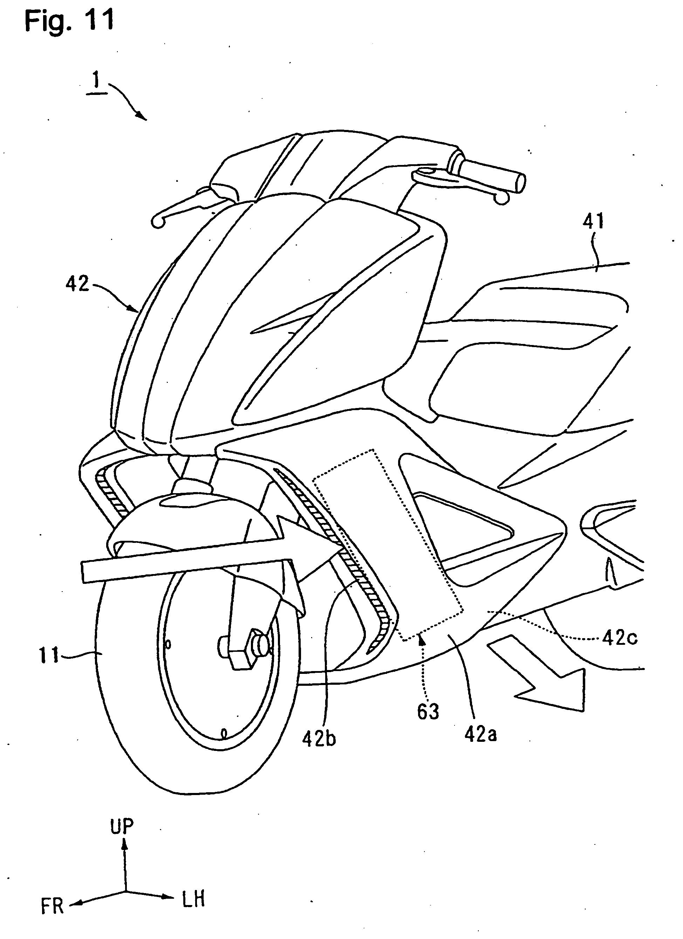

Referring to Figs. 1 to 11, an embodiment of the invention will be described below. A direction such as forward, backward, rightward and leftward in the following description shall be the same as a direction in a vehicle unless special description is made. An arrow FR in the drawing indicates the front of the vehicle, an arrow LH indicates the left of the vehicle, and an arrow UP indicates the upside of the vehicle.

A motorcycle 1 shown in Figs. 1 to 3 is a fuel cell electric vehicle run by driving a motor 31 for driving the vehicle based upon electric power supplied from a fuel cell 51 mounted substantially in the center of the body. The motorcycle 1 is also a scooter-type vehicle provided with a low deck floor part (hereinafter merely called a floor part) 3, the rectangular parallelepipedic fuel cell 51 is arranged in the vicinity of the floor part 3, and the motor 31 as a so-called wheel-in motor is arranged inside a rear wheel 32 which is a driving wheel of the motorcycle 1. The motor 31 is provided with the body of the motor and a deceleration mechanism in a casing 31a, is formed as an integrated unit, and is attached in the wheel from the left side for example in a state in which its output shaft is arranged coaxially with an axle 32a of the rear wheel.

A front wheel 11 of the motorcycle 1 is supported by the lower ends of a pair of right and left front forks 12 and the upside of each front fork 12 is supported by a head pipe 5 at the front end of a body frame 4 via a steering stem 13 so that the front fork can be steered. A handlebar 14 is attached to the upper end of the steering stem 13, a throttle grip 15 is arranged on a right grip of the handlebar 14, and a rear brake lever 16 and a front brake lever 17 are arranged in front of the left and right grips.

A pivot plate 8 extended in a vertical direction of the body is provided to the rear of the body frame 4 and the front end of a rear swing arm 21 is supported via a pivot 9 by a slightly lower part of an intermediate part of the pivot plate 8 so that the side of the rear end can be vertically rocked. A left arm body 23 of the rear swing arm 21 is extended up to the front end of the motor 31 and supports the casing 31a of the motor 31, while a right arm body 24 is extended up to a center position of the rear wheel 32 and supports the axle 32a of the rear wheel. A motor unit 20 as a swing unit of the motorcycle 1 (in other words, as a rear frame for supporting the rear wheel 32 so that the rear wheel can be rocked) is formed mainly by the above-mentioned rear swing arm 21 and the motor 31.

A rear cushion 33 extended longitudinally is arranged below the body frame 4 and under the fuel cell 51. The rear end of the rear cushion 33 is coupled to a lower part of the body frame 4 and the front end of the rear cushion 33 is coupled to a lower part of the motor unit 20 (the rear swing arm 21) via a link mechanism 34. The link mechanism 34 strokes the rear cushion 33 longitudinally according to the vertical rocking of the motor unit 20 so that shock and vibration input to the motor unit 20 are absorbed by the stroke of the rear cushion 33.

The body frame 4 is provided with an upper tube 6 branched toward the right and the left from an upper part of the head pipe 5, extended diagonally backward and downward and extended backward after being bent in height equivalent to a substantial middle in a vertical direction of the body and a down tube 7 branched toward the right and the left from a lower part of the head pipe 5, extended diagonally backward and downward and extended backward after being bent at the lower end of the body, and the rear end of each upper tube 6 and the rear end of the down tube 7 are coupled to the upper end and the lower end of the pivot plate 8 located at the back of the fuel cell 51. Hereinafter, a part of the down tube 7 from the head pipe 5 to a bent part 7c at the lower end of the body will be described as a front side 7a and a part from the bent part 7c to the pivot plate 8 will be described as a lower side 7b.

Each upper tube 6 is extended further backward from the pivot plate 8 toward the rear end of the body and a rear half of each upper tube 6 is used for a seat frame for supporting a seat for occupants 41. A front half of the seat 41 is used for a part for a rider of the motorcycle 1 and a rear half is a part for a rear passenger.

The body of the motorcycle 1 is covered with a body cover 42 mainly made of synthetic resin. The body cover 42 also functions as a windshield and a part forms the floor part 3 together with the body frame 4. A main stand 37 for supporting the body in an upright state is attached to the center of the lower part of the body frame 4 and a side stand 38 for supporting the body in a state in which the body is inclined leftward is attached to the left side of the lower part of the body frame 4.

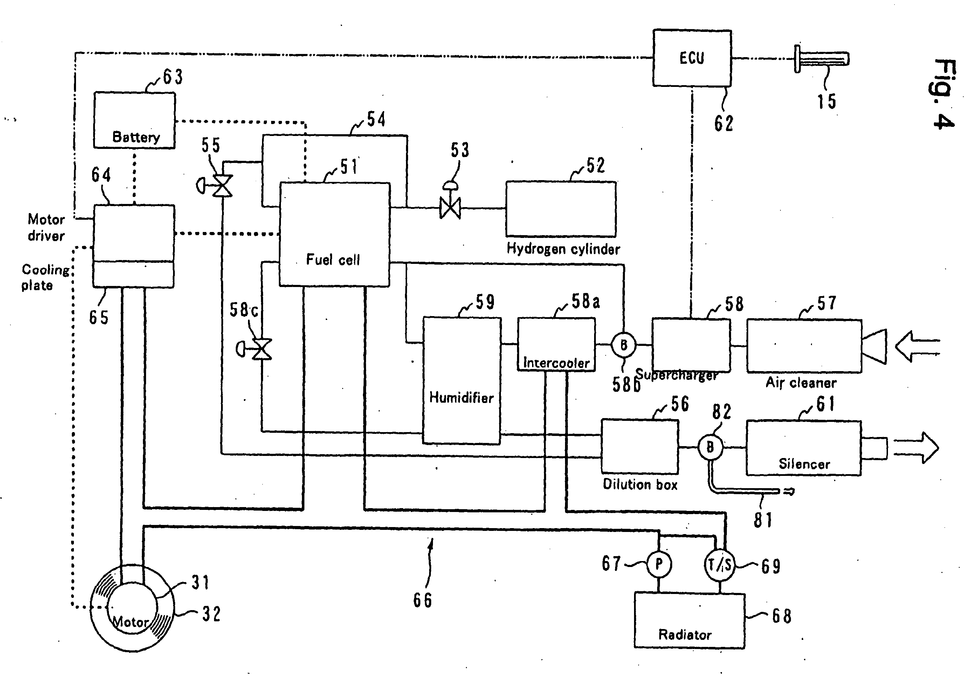

Referring to Fig. 4, the outline of a fuel cell system of the motorcycle 1 will be described below.

The fuel cell 51 is a well-known polymer electrolyte fuel cell (PEMFC) acquired by laminating multiple battery modules (battery cells), generates electric power by electrochemical reaction and generates water by supplying gaseous hydrogen as fuel gas to the anode side and supplying air including oxygen as oxidizer gas to the cathode side.

Gaseous hydrogen as fuel gas is supplied from a hydrogen cylinder 52 to the fuel cell 51 via a cut-off valve 53 under predetermined pressure (in other words, in a predetermined high-pressure state) and after the gaseous hydrogen is used for power generation, it is led into a hydrogen circulating passage 54. In the hydrogen circulating passage 54, unreacted gaseous hydrogen is repeatedly supplied to the fuel cell 51 together with fresh gaseous hydrogen from the hydrogen cylinder 52. Gaseous hydrogen circulated in the hydrogen circulating passage 54 can be led into a dilution box 56 via a purging valve 55.

In the meantime, air as oxidizer gas is supplied to the fuel cell 51 in a state pressurized by predetermined pressure after it is led into a supercharger 58 via an air cleaner 57 and is led into the dilution box 56 after it is used for power generation. A reference numeral 58a denotes an inter-cooler for cooling air (oxidizer gas) supplied to the fuel cell 51, 59 denotes a humidifier for supplying moisture to oxidizer gas, 58b denotes a bypass valve for supplying air without passing the inter-cooler 58a and the humidifier 59 when the fuel cell 51 is at low temperature, and 58c denotes a back pressure valve for adjusting the pressure of oxidizer gas in the fuel cell 51.

When the purging valve 55 provided to the hydrogen circulating passage 54 is opened, gaseous hydrogen after reaction is led into the dilution box 56. After gaseous hydrogen stored in the dilution box 56 is mixed with air emitted from the fuel cell 51 and similarly stored in the dilution box 56 and is diluted, it is emitted into the air via a silencer 61.

Water generated in the fuel cell 51 is extracted when it is led into the humidifier 59 together with emitted air and is reutilized for moisture supplied to oxidizer gas. Moisture (for example, water vapor) not extracted into the humidifier 59 is exhausted together with reacted gas via the dilution box 56 or is exhausted via a drainage pipe 81 after the moisture is condensed in the dilution box 56. A control valve 82 for opening or closing its channel at predetermined timing (for example, every predetermined time) is provided to the drainage pipe 81.

The operation of the fuel cell 51 is controlled by an electronic control unit (ECU) 62. Concretely, a signal related to the pressure and the temperature of gaseous hydrogen and oxidizer gas, a signal related to vehicle speed and the number of revolutions of the supercharger 58 and a signal related to the fuel cell 51 and the temperature of its cooling water are input to ECU 62, and the operation of the supercharger 58, the bypass valve 58b, the back pressure valve 58c, the purging valve 55 and the cut-off valve 53 is controlled according to each signal of these.

Besides, an acceleration request signal from the throttle grip 15 is input to ECU 62 and the drive of the motor 31 for driving the rear wheel 32 is controlled according to the signal. The motor 31 is a three-phase motor driven when direct current from the fuel cell 51 or a battery 63 as a secondary battery is supplied after the direct current is converted to three-phase alternating current in a motor driver 64 as an inverter unit.

For a cooling system in the fuel cell system, a cooling channel 66 for making each channel in a water jacket of the fuel cell 51 and the motor 31, in the inter-cooler 58a and in a cooling plate (a cooler) 65 adjacent to the motor driver 64 communicate is formed, and a water pump 67 and a radiator 68 are provided to the cooling channel 66.

In such a cooling system, as cooling water is circulated in the cooling channel 66 by the operation of the water pump 67, heat is absorbed from the fuel cell 51, the motor 31, oxidizer gas and the motor driver 64 and the heat is radiated by the radiator 68. A reference numeral 69 denotes a thermostat for circulating cooling water without passing the radiator 68 when the fuel cell 51 is at low temperature.

To explain referring to Figs. 1 to 3, the hydrogen cylinder 52 is a general high-pressure gas cylinder having cylindrical appearance and is a general compound reservoir made of metal and fiber reinforced plastic. Such a hydrogen cylinder 52 is arranged above the rear wheel 32 and on the right side of the rear of the body so that the axis (the center line) C is longitudinal, detailedly so that the axis C is inclined slightly downward ahead. The hydrogen cylinder 52 at this time is arranged so that the right side end (the outside end) is located slightly outside the outside end of the upper tube 6 on the right side of the body and the left side end (the inside end) is located slightly outside the outside end of the rear wheel 32.

The front and rear ends of the hydrogen cylinder 52 are formed spherically (in other words, in a tapered state) and the hydrogen cylinder is arranged so that the front end is located in front of the pivot plate 8 and the rear end is located at the rear end of the body. At the rear end of the hydrogen cylinder 52, a main tap 71 of the hydrogen cylinder 52 and a hydrogen filling port 72 are arranged.

The upper tube 6 on the left side of the body is inclined backward and slightly upward and is extended substantially linearly backward, while the upper tube 6 on the right side of the body is extended gently downward in the vicinity of the pivot plate 8, compared with the upper tube 6 on the left side of the body. Such each upper tube 6 is gently directed outside in a direction of the width of the body in the vicinity of the pivot plate 8.

Besides, the upper tube 6 on the right side of the body is provided so that the lower end is substantially overlapped with the lower end of the hydrogen cylinder 52 when the body is viewed from the side, is bent upward at the rear end of the body, is bent downward after the upper tube is extended toward the left side of the body to avoid the main tap 71 of the hydrogen cylinder 52 and the hydrogen filling port 72, and is coupled to the rear end of the upper tube 6 on the left side of the body.

The fuel cell 51 is wide in the direction of the width of the body, is vertically flat, and a supply port and an exhaust port of oxidizer gas and gaseous hydrogen, an inlet and an outlet of cooling water are provided to the front wall.

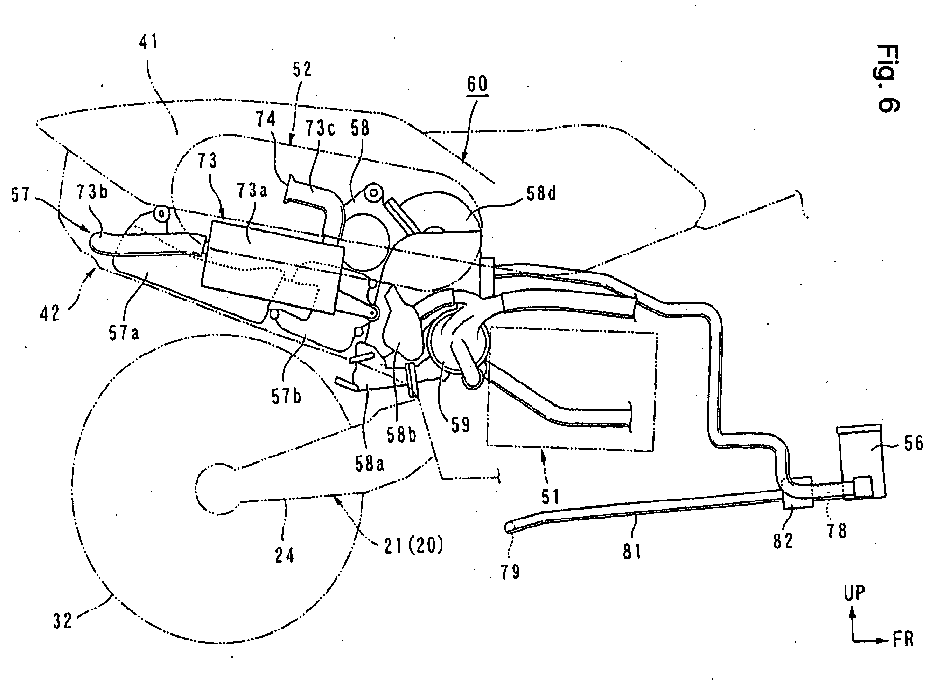

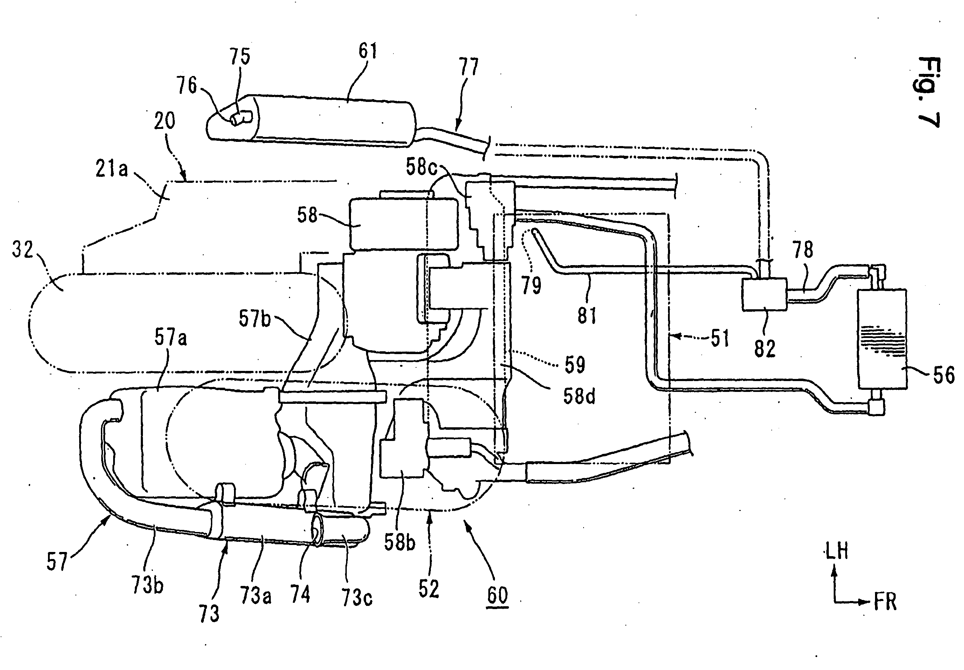

To explain also referring to Figs. 6 and 7, the humidifier 59 having a body long in the direction of the width of the body is arranged closely on the upside and at the back of the fuel cell 51. The supercharger 58 is arranged closely on the diagonally upside and at the back of the left side of the humidifier 59 and the left side of an introduction duct 57b extended in the direction of the width of the body is connected to the diagonally lower rear of the supercharger 58. The back pressure valve 58c is arranged closely over the left side of the humidifier 59.

The introduction duct 57b is provided so that the right side is located under the hydrogen cylinder 52 and the front end of an air cleaner case 57a located similarly under the hydrogen cylinder 52 is connected to the right side. An intake duct 73 is connected to the rear end of the air cleaner case 57a and the air cleaner 57 is configured mainly by the intake duct 73, the air cleaner case 57a and the introduction duct 57b.

The intake duct 73 is arranged closely on the right side of the air cleaner case 57a and the introduction duct 57b and is extended longitudinally along these. The intake duct 73 is provided with the body 73a of the duct as a chamber flat in the direction of the width of the body, a connecting tube 73b bent after the connecting tube is extended backward from the rear end of the body 73a of the duct and connected to the rear end of the air cleaner case 57a and an intake nozzle 73c bent backward after the intake nozzle is extended upward from the front side of the upper end of the body 73a of the duct, and the intake nozzle 73c forms a funnel-shaped intake port 74 open toward the back in a position on the upside of the rear wheel 32. The intake port 74 is surrounded by the seat 41 and the body cover 42 and the invasion of a foreign matter such as water, mud and dust is inhibited.

The bypass valve 58b is arranged closely at the back of the right side of the humidifier 59 and the inter-cooler 58a is arranged closely at the diagonally lower back of the bypass valve 58b. The bypass valve 58b and the inter-cooler 58a are arranged so that they are located between the right side of the humidifier 59 and the right side of the introduction duct 57b in a longitudinal direction of the body. One end of a lead-through duct 58d is connected to a squirt hole located in the diagonally upper front of the supercharger 58 and the other end of the lead-through duct 58d is extended rightward, being bent to avoid the front end of the hydrogen cylinder 52 and is connected to an inlet of the inter-cooler 58a.

The silencer 61 flat in the direction of the width of the body is arranged on the left side of the rear of the body so that the silencer is located outside the upper tube 6 on the left side of the body in the direction of the width of the body. The silencer 61 is substantially rectangular when it is viewed from the side of the body and is arranged in a state inclined so that the rear is located higher on the diagonally upper left side of the rear wheel 32. The silencer 61 is provided to a rear half of an exhaust pipe 77 inclined so that the rear is located higher, a tail pipe 75 is protruded backward from the rear end of the silencer 61 (the exhaust pipe 77), and an exhaust port 76 of reacted gas is formed at the rear end of the tail pipe 75.

The silencer 61 (the exhaust pipe 77) is arranged on the left side of the rear wheel 32, while the air cleaner 57 is arranged on the right side of the rear wheel 32. The silencer 61 and the air cleaner 57 are both arranged at the back of the fuel cell 51. The silencer 61 and the air cleaner 57 arranged on the left and on the right with the rear wheel 32 between them in the rear of the body as described above separate the exhaust port 76 and the intake port 74 by a predetermined amount and locate the intake port 74 on the upside by a predetermined amount of the rear wheel 32.

Intake members including the air cleaner 57, the supercharger 58, the bypass valve 58b, the inter-cooler 58a and the humidifier 59 and exhaust members including the back pressure valve 58c and the silencer 61 (the exhaust pipe 77) are mutually arranged closely at the back of the fuel cell 51, that is, in the rear of the body and an intake/exhaust module 60 is formed by integrating each intake member and each exhaust member via a coupling stay not shown and others.

The radiator 68 is divided into a relatively small upper radiator 68a located in front of the head pipe 5 and a relatively large lower radiator 68b located in front of the front side 7a of each down tube 7. The water pump 67 is arranged at the back of the right side of the lower radiator 68b and the thermostat 69 is arranged at the back of the diagonally downside of the water pump 67. The battery 63 flat in the direction of the width of the body is arranged inside each body cover 42 located on both sides of the lower radiator 68b.

As shown in Figs. 1, 2, 8 and 11, a part on the front lower side of the body cover 42 is equivalent to a front side cover 42a covering the lower radiator 68b and an upper part of the front wheel 11 from both sides and the battery 63 flat in the direction of the width of the body is arranged inside each front side cover 42a.

The leading edge of each front side cover 42a is provided in an inclined state so that a lower position when the body is viewed from the side is located further behind and an intake port 42b vertically long along the leading edge is provided to the leading edge. Each intake port 42b is open toward the front of the body and outside air can be taken inside the front side cover 42a when the motorcycle 1 is run.

In the meantime, an exhaust port 42c from which outside air taken from the intake port 42b can be exhausted is provided to a lower end of the rear of each front side cover 42a. Outside air can be circulated inside each front side cover 42a by providing each intake port 42b and each exhaust port 42c and hereby, the battery 63 arranged inside the front side cover 42a can be cooled.

As shown in Figs. 1 to 3, the dilution box 56 is arranged between the bent parts 7c of each down tube 7 so that the dilution box is protruded downward from the lower end of the lower side 7b. An exhaust short pipe 78 is led out of the dilution box 56, is connected to the front side of the lower side 7b of the down tube 7 on the left side of the body, and the exhaust pipe 77 is led from the rear side of the lower side 7b. That is, the down tube 7 on the left side of the body forms a part of an exhaust path of reacted gas and therefore, gas emitted from the dilution box 56 is exhausted into the air via the exhaust short pipe 78, the lower side 7b of the down tube 7 and the exhaust pipe 77.

The drainage pipe 81 is branched from an intermediate part of the exhaust short pipe 78 via the control valve 82 and is extended backward along the lower side 7b of the down tube 7 on the left side of the body. The control valve 82 is closed at normal time for example, closes a waterway of the drainage pipe 81, makes only exhaust gas flow, in the meantime, the control valve is opened only for fixed time at predetermined timing, makes exhaust gas flow, and can exhaust water stored in the dilution box 56 outside the body via the drainage pipe 81.

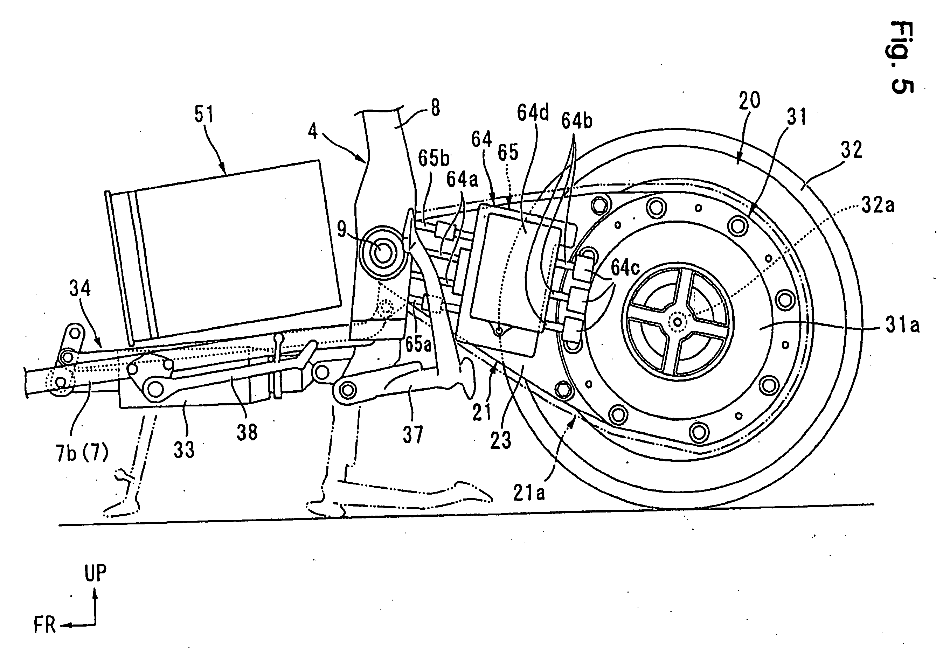

To explain also referring to Fig. 5, the motor driver 64 is substantially rectangular when the body is viewed from the side and is attached to the outside in the direction of the width of the body of the left arm body 23 of the rear swing arm 21 via the cooling plate 65. High-voltage wiring 64a for supplying electric power from the fuel cell 51 and the battery 63 is connected to the front end of the motor driver 64. A feed pipe 65a and a drainage pipe 65b which are a part of the cooling channel 66 are connected to a lower part and an upper part of the front end of the cooling plate 65.

Three-phase high-voltage wirings 64b are led out from the rear end of the motor driver 64 and each-phase high-voltage wiring 64b is connected to a feeding terminal at the front end of the motor 31 located immediately at the back of the motor driver 64. That is, the motor driver 64 is arranged close to the motor 31 to an extent that the motor driver is not overlapped with the motor when the body is viewed from the side. A reference numeral 64c denotes a current sensor provided to each-phase high-voltage wiring 64b for detecting an amount of current fed to the motor 31 and 64d denotes a voltage smoothing capacitor as a part of the motor driver 64.

An arm cover 21a as a part of the rear swing arm 21 is mounted on the motor unit 20. The arm cover 21a covers the motor driver 64, the cooling plate 65, the voltage smoothing capacitor 64d, each high-voltage wiring 64a, 64b, the feed pipe 65a, the drainage pipe 65b and the current sensor 64c together with rear swing arm 21 and the motor 31 and suitably protects them. A fresh-air inlet and a fresh-air outlet not shown are provided to the arm cover 21a so that outside air can be circulated inside the arm cover 21a.

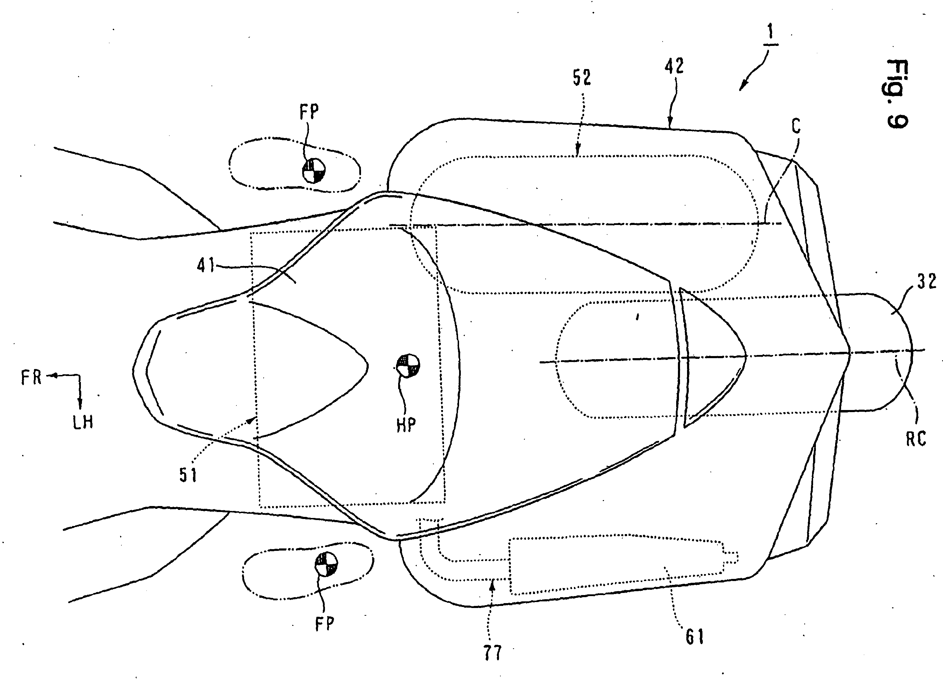

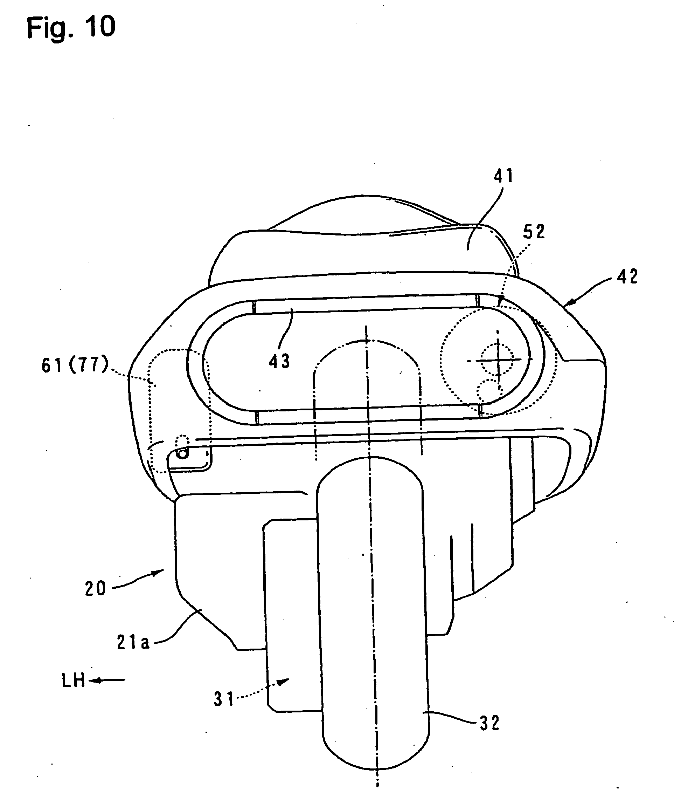

As shown in Fig. 9, the hydrogen cylinder 52 is arranged so that the left side end (the inside end) is located outside the outside end of the rear wheel 32, in other words, the axis C of the hydrogen cylinder 52 is off a plane passing the center in the direction of the width of the rear wheel 32 (shown in the drawing as a center line RC in the direction of the width of the rear wheel 32) on the right side of the body. Therefore, the hydrogen cylinder 52 and the rear wheel 32 are not overlapped in the direction of the width of the body, therefore as shown in Fig. 10, when the rear wheel 32 is rocked upward together with the motor unit 20, the rear wheel 32 and the hydrogen cylinder 52 also interfere with each other. The plane passing the center in the direction of the width of the rear wheel 32 is also a center plane of the body. A reference numeral 43 denotes a tail lamp without an end substantially elliptic when the body is viewed from the back.

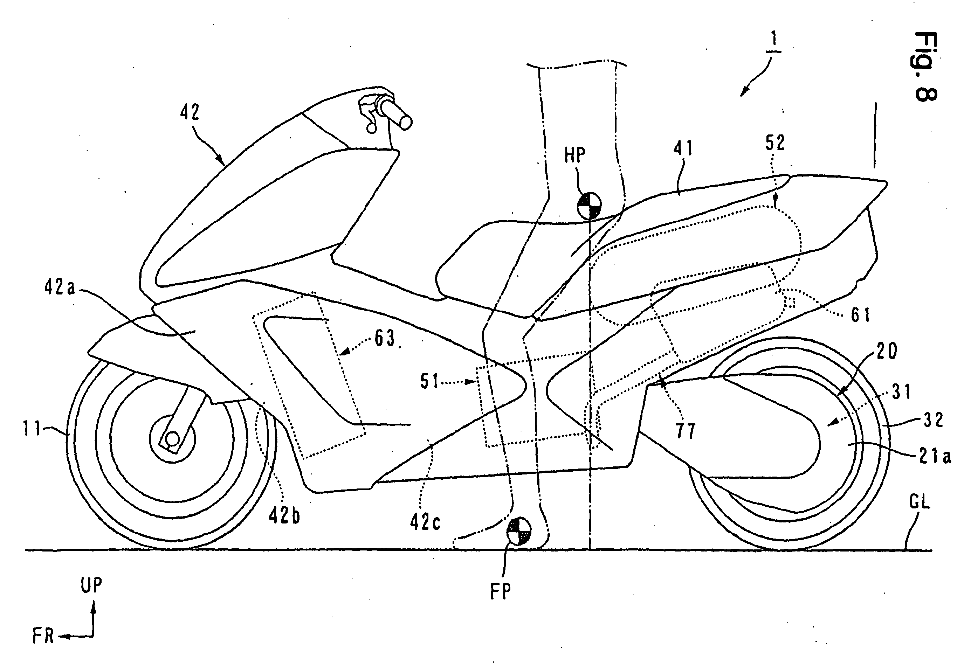

As shown in Figs. 8 and 9, the hydrogen cylinder 52 is arranged so that the position of the front end is substantially the same in the longitudinal direction as a rider's seated reference position (hereinafter merely called a seated position) HP of the seat 41.

A code FP in Figs. 8 and 9 denotes a foot put reference position (hereinafter merely called a foot put position) when the rider seated on the seat 41 puts his/her feet on the ground (shown by a line GL) while the vehicle is stopped and the foot put position FP is located in front of the seated position HP, that is, in front of the front end of the hydrogen cylinder 52.

As the left side of the body cover 42 covers the silencer 61 (the exhaust pipe 77) in a part at the back of the seated position HP and the right side covers the hydrogen cylinder 52, the body cover 42 also protects them. The substantially same part in the longitudinal direction of such a body cover 42 as the seated position HP is formed spherically along the curved shape of the exhaust pipe 77 or the shape at the front end of the hydrogen cylinder 52.

As described above, the fuel cell electric vehicle (the motorcycle 1) in the embodiment is provided with the fuel cell 51 for generating electric power by reacting hydrogen and oxygen, the hydrogen cylinder 52 for supplying gaseous hydrogen to the fuel cell 51 and the motor 31 for generating motive power supplied to the rear wheel 32 which is a driving wheel based upon electric power generated by the fuel cell 51, the hydrogen cylinder 52 is arranged above the rear wheel 32 so that its longitudinal direction is along the longitudinal direction of the body, and the axis C along the longitudinal direction of the hydrogen cylinder 52 is located off the center line RC in the direction of the width of the rear wheel 32.

According to the configuration, clearance between the hydrogen cylinder 52 and the rear wheel 32 can be secured without merely moving the hydrogen cylinder 52 upward. That is, in the motorcycle 1 in which the rear wheel 32 is attached to the motor unit 20 supported by the body frame 4 so that the motor unit can be rocked, the sufficient stroke of the rocked rear wheel 32 can be secured, lowering the center of the gravity of the vehicle.

In the above-mentioned fuel cell electric vehicle, as the end of the hydrogen cylinder 52 is located substantially just beside the seated position HP of the motorcycle 1 which is a saddle-ride type vehicle, the width of the body in the following part along the foot can be prevented from being wider by the hydrogen cylinder 52 even if the seated rider puts his/her foot in the foot put position FP normally located in front of the seated position HP. That is, the width of the body in the part along the rider's foot is inhibited and the comfort in putting his/her foot of the vehicle can be enhanced.

Further, in the fuel cell electric vehicle, as the hydrogen cylinder 52 is substantially cylindrical and the end is tapered (concretely, spherical), the comfort in putting his/her foot of the vehicle can be more enhanced.

Furthermore, in the fuel cell electric vehicle, as the body cover 42 covering the hydrogen cylinder 52 is provided, the hydrogen cylinder 52 can be protected from water and flying gravel and the appearance quality of the vehicle can be kept satisfactory.

In the above-mentioned embodiment, the configuration that the hydrogen cylinder 52 is arranged on one side (on the right side) off the center line RC of the driving wheel (the body) is described as an example, however, two hydrogen cylinders (for example, a left hydrogen cylinder and a right hydrogen cylinder) are provided and may be also arranged off the center line RC. That is, the left hydrogen cylinder may be also arranged on the left side off the center line RC and the right hydrogen cylinder may be also arranged on the right side off the center line RC. In such configuration, clearance between each hydrogen cylinder and the driving wheel can be also sufficiently secured.

The configuration in the above-mentioned embodiment is an example, it is natural that the configuration is not limited to application to a motorcycle, and it need scarcely be said that various modifications are allowed within the in a scope of the appended claims.

## Claims

1. A two-wheeled fuel cell electric vehicle (1) which is provided with a fuel cell (51) for generating electric power by reacting hydrogen and oxygen, a hydrogen cylinder (52) for supplying gaseous hydrogen to the fuel cell (51) and a motor (31) for generating motive power supplied to a driving wheel (32) based upon electric power generated by the fuel cell (51) and in which the hydrogen cylinder (52), in an unrocked state of the driving wheel (32), is arranged above the driving wheel (32) with a longitudinal direction of the hydrogen cylinder (52) extending along a longitudinal direction of the vehicle (1), wherein:
the hydrogen cylinder (52) is located with respect to a widthwise center plane (RC) of the driving wheel (32) offset in a direction of the width of the driving wheel (32), such that the hydrogen cylinder (52) and the driving wheel (32) do not overlap in the direction of the width of the vehicle body, such that the hydrogen cylinder (52) and the driving wheel (32) do not interfere with each other when the driving wheel (32) is rocked upwards.

2. The fuel cell electric vehicle (1) according to claim 1, wherein:
the driving wheel (32) is attached to a rear frame (21) supported by a body frame (4) so that the rear frame (21) can be rocked.

3. The fuel cell electric vehicle (1) according to claim 1 or 2, wherein:
the hydrogen cylinder (52) is located in a position in which the end is substantially just beside a position of a seat (41) of the vehicle (1).

4. The fuel cell electric vehicle (1) according to any of claims 1 to 3, wherein:
the hydrogen cylinder (52) is substantially cylindrical; and the end is tapered.

5. The fuel cell electric vehicle (1) according to any of claims 1 to 4, comprising:
a body cover (42) for covering the surface of the hydrogen cylinder (52).

## Patentansprüche

1. Zweirädriges Brennstoffzellen-Elektrofahrzeug (1), das versehen ist mit einer Brennstoffzelle (51) zum Erzeugen von elektrischer Energie durch Reaktion von Wasserstoff und Sauerstoff, einer Wasserstoffflasche (52) zum Zuführen von gasförmigem Wasserstoff zu der Brennstoffzelle (51), und einem Motor (31) zum Erzeugen einer einem Antriebsrad (32) zugeführten Antriebskraft basierend auf der von der Brennstoffzelle (51) erzeugten elektrischen Energie, und worin die Wasserstoffflasche (52) in einem nicht geschwenkten Zustand des Antriebsrads (32) oberhalb des Antriebsrads (32) angeordnet ist, wobei sich eine Längsrichtung der Wasserstoffflasche (52) entlang einer Längsrichtung des Fahrzeugs (1) erstreckt, worin:
die Wasserstoffflasche (52) in Bezug auf eine Breiten-Mittelebene (RC) des Antriebsrads (32) in Breitenrichtung des Antriebsrads (32) versetzt angeordnet ist, sodass die Wasserstoffflasche (52) und das Antriebsrad (32) in der Breitenrichtung des Fahrzeugkörpers nicht überlappen, sodass die Wasserstoffflasche (52) und das Antriebsrad (32) einander nicht stören, wenn das Antriebsrad (32) aufwärts geschwenkt wird.

2. Brennstoffzellen-Elektrofahrzeug (1) nach Anspruch 1, worin das Antriebsrad (32) an einem von einem Hauptrahmen (4) getragenen Heckrahmen (21) angebracht ist, sodass der Heckrahmen (21) geschwenkt werden kann.

3. Brennstoffzellen-Elektrofahrzeug (1) nach Anspruch 1 oder 2, worin die Wasserstoffflasche (32) an einer Position angeordnet ist, in der das Ende im Wesentlichen direkt neben einer Position eines Sitzes (41) des Fahrzeugs (1) liegt.

4. Brennstoffzellen-Elektrofahrzeug (1) nach einem der Ansprüche 1 bis 3, worin die Wasserstoffflasche (32) im Wesentlichen zylindrisch ist und das Ende verjüngt ist.

5. Brennstoffzellen-Elektrofahrzeug (1) nach einem der Ansprüche 1 bis 4, das eine Rumpfabdeckung (42) aufweist, um die Oberfläche der Wasserstoffflasche (52) abzudecken.

## Revendications

1. Véhicule électrique à deux roues à pile à combustible (1) qui est pourvu d'une pile à combustible (51) pour générer de l'énergie électrique en faisant réagir de l'hydrogène et de l'oxygène, d'un cylindre d'hydrogène (52) pour délivrer de l'hydrogène gazeux à la pile à combustible (51) et d'un moteur (31) pour générer une énergie motrice délivrée à une roue motrice (32) sur la base de l'énergie électrique générée par la pile à combustible (51), et dans lequel le cylindre d'hydrogène (52), dans un état non basculé de la roue motrice (32), est agencé au-dessus de la roue motrice (32) avec une direction longitudinale du cylindre d'hydrogène (52) s'étendant le long d'une direction longitudinale du véhicule (1), dans lequel :
le cylindre d'hydrogène (52) est situé, par rapport à un plan central dans le sens de la largeur (RC) de la roue motrice (32), décalé dans une direction de la largeur de la roue motrice (32), de sorte que le cylindre d'hydrogène (52) et la roue motrice (32) ne se chevauchent pas dans la direction de la largeur de la carrosserie de véhicule, de sorte que le cylindre d'hydrogène (52) et la roue motrice (32) n'interfèrent pas l'un avec l'autre lorsque la roue motrice (32) est basculée vers le haut.

2. Véhicule électrique à pile à combustible (1) selon la revendication 1, dans lequel :
la roue motrice (32) est fixée à un cadre arrière (21) supporté par un cadre de carrosserie (4) de sorte que le cadre arrière (21) puisse être basculé.

3. Véhicule électrique à pile à combustible (1) selon la revendication 1 ou 2, dans lequel :
le cylindre d'hydrogène (52) est situé à une position à laquelle l'extrémité est sensiblement juste à côté d'une position d'un siège (41) du véhicule (1).

4. Véhicule électrique à pile à combustible (1) selon l'une quelconque des revendications 1 à 3, dans lequel :
le cylindre d'hydrogène (52) est sensiblement cylindrique, et l'extrémité est effilée.

5. Véhicule électrique à pile à combustible (1) selon l'une quelconque des revendications 1 à 4, comprenant :
un capot de carrosserie (42) pour recouvrir la surface du cylindre d'hydrogène (52).
